# EUROPÄISCHE PATENTSCHRIFT

(11) **EP 2 159 601 B1**
(45) Veröffentlichungstag und Bekanntmachung des Hinweises auf die Patenterteilung: **03.01.2018**
(21) Anmeldenummer: 09165078.8
(22) Anmeldetag: 09.07.2009
(51) Int. Cl.: G01S 7/527, G01S 15/18

(54) **Verfahren zum Festlegen einer Empfangsschwelle, Vorrichtung zum Festlegen einer Empfangsschwelle, Ultraschallsonar**
Method for fixing a reception sleeper, device for fixing a reception sleeper, ultrasound sonar
Procédé de fixation d'un arbre de réception, dispositif de fixation d'un arbre de réception, sonar à ultrasons

(30) Priorität: 02.09.2008 DE 102008041752
(43) Veröffentlichungstag der Anmeldung: 03.03.2010
(73) Patentinhaber: ROBERT BOSCH GMBH, 70442 Stuttgart (DE)
(72) Erfinder: Reiche, Martin, 71263, Weil Der Stadt (DE); Frank, Michael, 75015, Bretten (DE)

(56) Entgegenhaltungen:
- US-A1- 2005 197 590
- US-A1- 2008 192 573
- US-B2- 7 327 635

## Beschreibung

### STAND DER TECHNIK

Die vorliegende Erfindung betrifft ein Verfahren zum Festlegen einer Empfangsschwelle, eine Vorrichtung zum Festlegen einer Empfangsschwelle und ein Ultraschallsonar.

Ein Ultraschallsonar ist aus der DE 10 2004 006 020 A1 bekannt. Ein Echo eines ausgesendeten Ultraschallsignals wird als Eingangssignal empfangen und ausgewertet. Der Pegel des Eingangssignals wird mit einer Empfangsschwelle verglichen, um Hintergrundsignale auszufiltern. Die Empfangsschwelle kann in Abhängigkeit der verstrichenen Dauer nach dem zuletzt ausgesandten Ultraschallsignal festgelegt werden. Zudem weist die Empfangsschwelle einen festen Minimalwert auf.

Das Dokument US 2005/0197590 A1 beschreibt ein System zur Bestimmung von epileptischen Anfällen und deren Vorhersage, wobei verschiedene Signale wie EKG, Atemfrequenz, magnetische Felder, thermische Potenziale oder chemische Konzentrationen erfasst werden. Dabei wird die Signalstärke in bestimmten Frequenzbändern verringert, wenn ein epileptischer Anfall beendet ist. Das Verfahren/die Vorrichtung misst dabei die Dauer einer Verringerung der Signalstärken nach einem starken Anstieg der Signalstärke.

Das Dokument US 2008/192573 A1 beschreibt ein Verfahren und eine Vorrichtung die Ultraschallsignale verwenden. Ein empfangenes Ultraschallsignal wird dabei verstärkt und ein hochfrequenter Anteil aus dem verstärkten Empfangssignal gefiltert. Ein Ausgangssignal wird erzeugt, wenn das geschilderte Signal eine vorbestimmte Neue Beschreibungsseite 1a (Reinschrift)

Bedingung erfüllt. Mithilfe eines Komparators, der einen oberen und einen unteren Schwellenwert aufweist, kann die Periode des Signals ermittelt werden.

Das Dokument US 7327635 B2 beschreibt einen adaptiven Komparatorschaltkreis und einen akustischen Entfernungsmessungssensor, der diesen Schaltkreis aufweist.

Dabei umfasst der Komparatorschaltkreis einen Komparator mit einem Schwellenwerteingang, der eine Schwellenwertspannung empfängt und einem Signaleingang, der ein Spannungssignal empfängt. Der Schwellenwerteingang ist mit einem Pol mittels eines Schalters und mit einem anderen Pol der ersten Spannungsquelle mittels einer Kapazität verbunden. Der Schwellenwerteingang ist zusätzlich mit dem Signaleingang des Komparators mittels einer Diode oder einer zweiten Spannungsquelle verbunden. Der Schalter wird durch ein Kontrollsignal des Signalsenders kontrolliert. Wenn der Schalter geschlossen ist, wird die Kapazität mit der Spannung der ersten Spannungsquelle geladen. Wenn der Schalter offen ist, wird die Kapazität auf eine Weise entladen, dass die Schwellenspannung der Signalspannung zu einem bestimmten Zeitintervall korrigiert wird.

Ein Ultraschallsonar kann in vielfältigen Umgebungen mit unterschiedlich gearteten Störquellen eingesetzt werden. Induktionsschleifen für bedarfsgesteuerte Ampeln und Gasentladungslampen mit elektronischen Vorschaltgeräten verursachen beispielsweise periodische Störsignale im Bereich von 50 kHz. Störende Reflexionen an Schotter am Straßenrand oder am Rand von Parkbuchten können zu einem Störpegel (Clutter) führen, der über bestimmte Entfernungsabschnitte entsprechend der Einbauposition auftritt.

Nichtperiodische bzw. stochastische Störquellen können z.B. Windgeräusche oder akustische Quellen sein Die Störquellen sollen zwar möglichst effektiv unterdrückt werden, jedoch sollen ebenso schwache reflektierte Echos von fernen Objekten erfasst werden.

### OFFENBARUNG DER ERFINDUNG

Die Erfindung betrifft ein Verfahren und eine Vorrichtung zum Festlegen einer Empfangsschwelle eines Ultraschallsensors Ultraschallsonars nach Anspruch 1 bzw. 8. Ein Hintergrundsignal wird durch den Sensor empfangen. Eine erste Neue Beschreibungsseite 1b (Reinschrift)

Häufigkeit eines Durchschreitens eines ersten Schwellwertes durch das Hintergrundsignal und eine zweite Häufigkeit eines Durchschreitens eines zweiten Schwellwertes durch das Hintergrundsignal wird bestimmt. Der zweite Schwellwert ist größer als der erste Schwellwert gewählt. Die Empfangsschwelle wird basierend auf der ersten und zweiten Häufigkeit festgelegt.

Das Verfahren ermöglicht eine Empfangsschwelle adaptiv an die Umgebung anzupassen, insbesondere kann eine Mindestschwelle Th min an vorliegende Störquellen stochastischer Natur angepasst werden.

Ein weiterer Aspekt der Erfindung betrifft ein Verfahren zum Festlegen einer Empfangsschwelle eines Sensors. Ein Hintergrundsignal wird durch den Sensor während eines Horchfensters empfangen. Das Hintergrundsignal wird in ein stochastisches Rauschen oder ein periodisches Störsignal klassifiziert. Eine Empfangsschwelle wird festgesetzt basierend auf einer ersten Häufigkeit eines Durchschreitens eines ersten Schwellwertes durch das Hintergrundsignal und einer zweiten Häufigkeit eines Durchschreitens eines zweiten Schwellwertes durch das Hintergrundsignal, wobei der zweite Schwellwert betragsmäßig größer als der erste Schwellwert gewählt wird, wenn das Hintergrundsignal als stochastisches Rauschen klassifiziert wird. Oder die Empfangsschwelle wird festgesetzt basierend auf einem Tastverhältnis des Hintergrundsignals, wobei das Tastverhältnis durch Diskriminieren des Hintergrundsignals an einem dritten Schwellwert festgelegt wird, wenn das Hintergrundsignal als periodisches Störsignal klassifiziert wird.

Die Festlegung basierend auf dem Hintergrundsignal ermöglicht eine adaptive Anpassung an aktuell vorliegende Störsignale. Das Verfahren mit zwei unterschiedlichen Schwellwerten ermöglicht unter Anderem eine Klassifizierung des Hintergrundsignals in ein breitbandiges, weißes Rauschen oder ein schmalbandiges, periodisches Störsignal. Für beide Klassen können anhand ihrer typischen (mittleren) zeitlichen Abhängigkeit der Störsignale basierend auf der ersten und ggf. zusammen mit der zweiten Häufigkeit deren Rauschpegel und eine spezifische geeignete Empfangsschwelle bestimmt werden.

Ein weiterer Aspekt betrifft eine Vorrichtung zum Festlegen einer Empfangsschwelle. Diese beinhaltet einen ersten Komparator und einen ersten Zähler zum Erfassen einer ersten Häufigkeit eines Durchschreitens eines ersten Schwellwertes durch ein Hintergrundsignal und einen zweiten Komparator und einen zweiten Zähler zum Erfassen einer zweiten Häufigkeit eines Durchschreitens eines zweiten Schwellwertes durch das Hintergrundsignal, wobei der zweite Schwellwert betragsmäßig größer als der erste Schwellwert ist. Eine Datenverarbeitungseinrichtung dient zum Festlegen der Empfangsschwelle basierend auf der ersten und zweiten Häufigkeit.

Eine Ausgestaltung der Vorrichtung sieht einen dritten Komparator, einen zustandsgesteuerten, dritten Zähler und einen Taktgeber vor. Der dritte Komparator dient zum Vergleichen des Hintergrundsignals mit einem dritten Schwellwert. Ein Steuereingang des zustandsgesteuerten, dritten Zählers ist mit dem dritten Komparator zum Aktivieren und Deaktivieren des dritten Zählers in Abhängigkeit des Vergleichs des Hintergrundsignals mit dem dritten Schwellwert gekoppelt. Der Taktgeber ist mit einem Zählereingang des zustandsgesteuerten, dritten Zählers zum Zählen einer Anzahl von Takten während einer aktiven Phase des dritten Zählers gekoppelt. Ein Ausgang des zustandsgesteuerten, dritten Zählers ist mit der Datenverarbeitungseinrichtung zum Ermitteln einer Empfangsschwelle basierend auf der gezählten Anzahl von Takten gekoppelt. Aus der Anzahl der gezählten Takte kann ein Tastverhältnis eines periodischen Signals diskriminiert werden. In Bezug auf den unteren Schwellwert kann aus dem Tastverhältnis die Amplitude eines periodischen Signals bestimmen werden, dies bei einer angenommener Signalform, z.B. einem Sinussignal.

Ein weiterer Aspekt betrifft ein Ultraschallsonar mit einem Komparator zum Vergleichen eines Eingangssignals mit einer Empfangsschwelle und einem Schwellwertgenerator nach einem der vorherigen Aspekte zum Festlegen der Empfangsschwelle.

### KURZE BESCHREIBUNG DER ZEICHNUNGEN

Die vorliegende Erfindung wird nachfolgend anhand bevorzugter Ausführungsformen und beigefügten Figuren erläutert. In den Figuren zeigen:
- Fig. 1: ein Blockdiagramm eines Ultraschallsonars;
- Fig. 2: einen zeitlichen Verlauf einer Empfangsschwelle;
- Fig. 3: ein Flussdiagramm eines Verfahrens zum Betreiben des Ultraschallsonars;
- Fig. 4: ein Blockdiagramm eines Schwellwertgenerators.
- Fig. 5: ein beispielhaftes periodisches Störsignal;
- Fig. 6: ein Blockdiagramm eines Ausschnitts eines Schwellwertgenerators.

### AUSFÜHRUNGSFORMEN DER ERFINDUNG

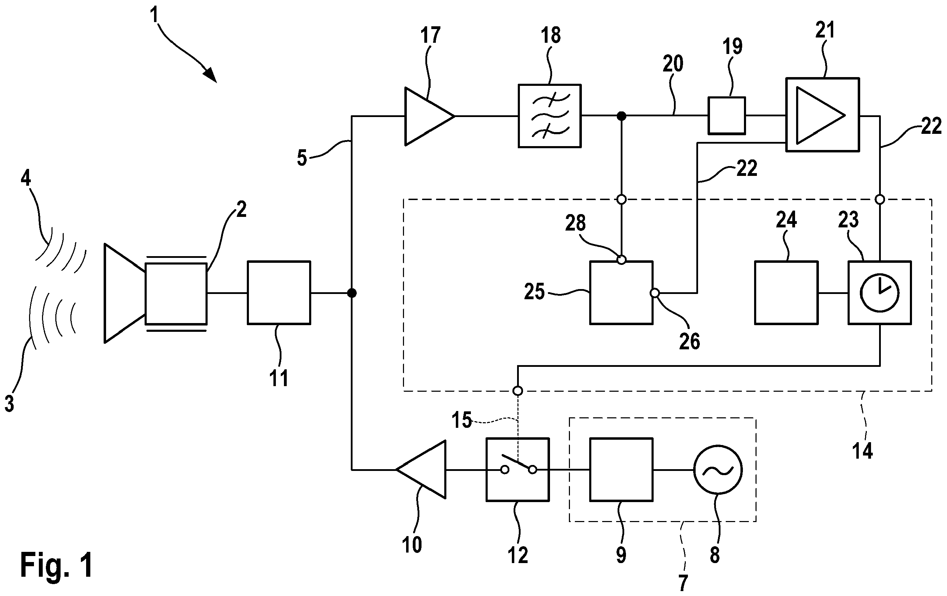

Fig. 1 zeigt als Blockschaltbild ein Beispiel eines Ultraschallsonars 1.

Ein Ultraschallwandler 2 dient eine Folge von Ultraschallsignalen 3 auszugeben und Echos 4 dieser Ultraschallsignale 3 zu empfangen und in elektrische Signale 5 zu wandeln.

Eine Anregung des Ultraschallwandlers 2 erfolgt durch einen Oszillator 7. Der Oszillator 7 kann durch einen Grundoszillator 8 und Frequenzteilerstufen 9 gebildet werden. Ferner können Stromtreiberstufen 10 und ein Übertrager 11 vorgesehen sein. Die Anregungsfrequenz des Ultraschallwandlers 2 kann im Bereich von 25 kHz bis 100 kHz, z.B. 48 kHz, liegen.

Die Anregung des Ultraschallwandlers 2 kann zeitlich gesteuert werden, derart dass nach einer Phase zum Aussenden eines Ultraschallsignals 3 eine Empfangsphase zum Empfangen der Echos 4 erfolgt. In dem schematischen Blockdiagramm ist hierfür beispielhaft ein Schaltelement 12 in den elektrischen Pfad 6 zwischen den Oszillator 7 und den Ultraschallwandler 2 geschaltet. Das Schaltelement 12 wird von einer Steuereinrichtung 14 angesteuert. Die Steuereinrichtung 14 gibt einen Puls 15 aus, für dessen Dauer das Schaltelement 12 in einen elektrisch leitenden Zustand geschalten wird. Der Ultraschallwandler 2 sendet für die Dauer des Pulses 15 das Ultraschallsignal 3 ab. Die Dauer des Pulses 15 und des Ultraschallsignals 3 kann im Bereich von 100µs bis 1 ms liegen.

Das von dem Ultraschallwandler 2 empfangene Echo 4 wird in ein elektrisches Signal 5 umgewandelt. Das elektrische Signal 5 wird verstärkt und gefiltert und kann hierzu eine Verstärkungsstufe 17 und einen Bandpassfilter 18 durchlaufen. Eine Mittenfrequenz des Bandpassfilters 18 liegt im Bereich der Oszillationsfrequenz des Oszillators 7. Die Bandbreite kann im Bereich von 1 kHz bis 10 kHz, z.B. 5 kHz, liegen. Eine Verstärkung von etwa 80 dB kann auf das elektrische Signal 5 angewandt werden.

Ein Demodulator 19 demoduliert das verstärkte und gefilterte Signal 20. Das demodulierte Signal wird einem Komparator 21 zugeführt. Der Komparator 21 vergleicht einen Signalpegel des demodulierten Signals mit einer Empfangsschwelle 22. Auf den Betrag, dessen Festlegung und die zeitliche Abhängigkeit der Empfangsschwelle 22 wird nachfolgend gesondert eingegangen.

Am Ausgang des Komparators 21 liegt ein Signal 22 mit ersten logischem Pegel an, wenn das demodulierte Signal am Komparator 21 betragsmäßig geringer als die aktuelle Empfangsschwelle 22 ist, und ein zweiter logischer Pegel an, wenn das demodulierte Signal 20 größer als die aktuelle Empfangsschwelle 22 ist.

Das Ausgangssignal 22 des Komparators 21 wird beispielsweise an einen Zeitnehmer 23 weitergeleitet. Der Zeitnehmer 23 kann wie dargestellt in der Steuereinrichtung 14 integriert oder eine separate Einheit sein. Der Zeitnehmer 23 empfängt seitens der Steuereinrichtung 14 ein Startsignal, z.B. das Signal 15, wenn, ein Ultraschallsignal 3 ausgesandt wird. Aus der Zeitspanne zwischen dem Startsignal und dem Auftreten des Ausgangssignals 22 des Komparators 21 wird eine Flugzeit des Ultraschallsignals 3 und eine Entfernung zu einem Objekt, das das Ultraschallsignal 3 reflektiert hat, bestimmt. Weitere Datenverarbeitungseinrichtungen 24 können für die Auswertung der ermittelten Zeitspanne in dem Ultraschallsonar 1 angeordnet sein.

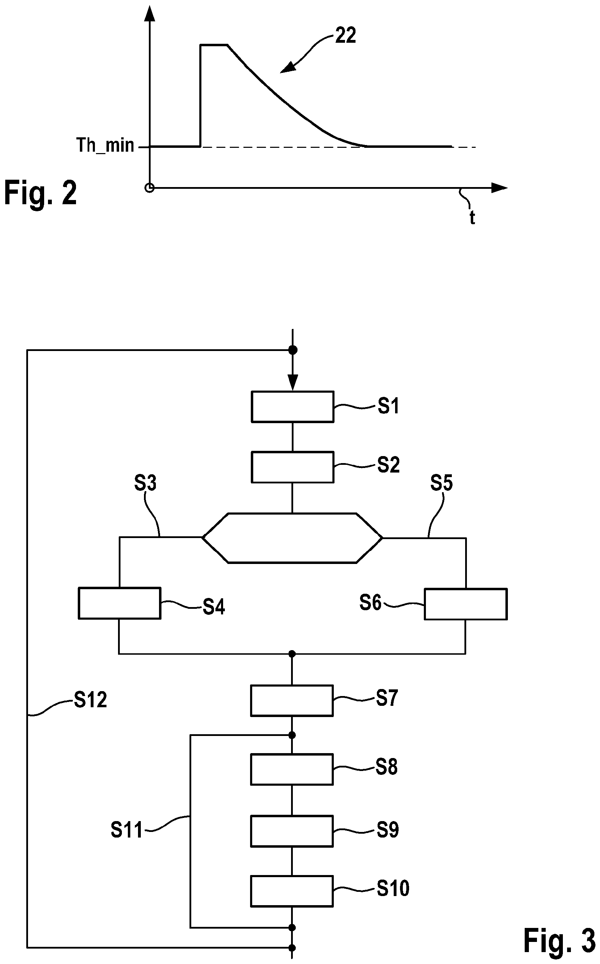

Die Empfangsschwelle 22 kann dynamisch festgelegt werden, z.B. durch die Steuereinrichtung 14 oder einen Schwellwertgenerator 25. Die Empfangsschwelle 22 wird dabei so eingestellt, dass einerseits mit einer geringen Wahrscheinlichkeit ein Störer als Echo 4 erkannt wird und andererseits eine hohe Empfindlichkeit für schwache, reflektierte Echos 4 gewährleistet bleibt. Die Empfangsschwelle 22 kann aus einer Mindestschwelle Th_min und einem über die Zeit sich ändernden Anteil zusammengesetzt sein, z.B. wie in Fig. 2 über die Zeit t dargestellt. Der zeitlich variable Anteil kann sich während der Dauer der Empfangsphase verringern, da Echos 4 von weit entfernten Objekten, die zuletzt eintreffen von geringerer Signalstärke sind, als die zuerst eintreffenden Echos 4 naher Objekte. Die zeitliche Abhängigkeit der Empfangsschwelle 22 kann beispielsweise in Form von Tabellen in dem Schwellwertgenerator 25 gespeichert sein. Die Echos 4 ferner Objekte können somit noch erfasst werden, die Echos 4 naher Objekte hingegen werden mit einem hohen Störabstand erfasst. Der Schwellwertgenerator 25 kann die Empfangsschwelle 22 anhand des sich über die Zeit ändernden Anteils der Empfangsschwelle 22 unter Berücksichtigung der Mindestschwelle Th min ausgeben.

Ein Ausgang 26 des Schwellwertgenerators 25 ist mit einem Signaleingang 27 des Komparators 21 zum Übermitteln einer Empfangsschwelle 22 gekoppelt. Die Empfangsschwelle 22 kann als analoges oder digitales Signal übertragen werden. Der Schwellwertgenerator 25 ist beispielsweise in der Steuereinrichtung 14 implementiert.

Eine beispielhafte Ausführungsform eines Verfahrens zum Betrieb eines Ultraschallsonars 1 unter Verwendung einer wiederholten Neufestsetzung einer Mindestschwelle Th min einer Empfangsschwelle 22 wird nachfolgend zusammengefasst (Fig. 3). Die Mindestschwelle Th min dient zum Unterdrücken von während einer Empfangsphase aktiver Störquellen. Unter Anderem können aufgrund der Bewegung eines Fahrzeuges und des Ultraschallsonars 1 neue räumlich begrenzte Störquellen hinzukommen oder Störquellen verschwinden. Die Mindestschwelle Th min kann dynamisch an vorliegende Rauschquellen während des Betriebs des Ultraschallsonars 1 angepasst werden.

Ein Zyklus des Betriebs beginnt mit einem Horchfenster von wenigen Millisekunden, z.B. 1 ms - 5 ms zum Aufnehmen eines Hintergrundsignals des elektrischen Signals 20 durch den Ultraschallwandler 2 (S1). Ein ausreichender zeitlicher Abstand, z.B. 200 ms, zwischen dem Horchfenster und einem Aussenden eines Ultraschallsignals 3 beim vorherigen Zyklus stellt sicher, dass kein Echo 4 signifikanter Signalstärke während des Horchfensters empfangen wird. Während des Horchfensters wird somit im Wesentlichen nur das Hintergrundsignal 20 aufgenommen. Eine Synchronisation kann beispielsweise durch die Steuereinrichtung 14 erfolgen.

Das aufgenommene Hintergrundsignal 20 durchläuft die gleichen Filter 17 und Verstärkungsstufen 18, wie das elektrische Signal 20 eines empfangenen Echos 4. Auf das Hintergrundsignal 20 sind somit die gleichen elektronischen Rauschquellen einer Empfangsstufe aufgeprägt, wie sie auf ein Echo 4 aufgeprägt werden. Ein Signaleingang 28 des Schwellwertgenerators 25 ist mit dem Ausgang des Bandpassfilters 18 gekoppelt und empfängt das verstärkte und gefilterte Hintergrundsignal 20 des Ultraschallwandlers 2.

Das Hintergrundsignal 20 wird analysiert (S2), um festzustellen ob es einen dominant stochastischen Rauschanteil oder ein dominantes periodisches Störsignal enthält. Liegt einerseits vorrangig ein stochastisches Rauschen (S3) vor, erfolgt eine Auswertung des Rauschpegels oder ein unmittelbares Festlegen einer Mindestschwelle Th_min mittels eines ersten und zweiten Schwellwerts gemäß einem nachfolgend beschriebenen Verfahren (S4). Liegt andererseits ein dominantes periodisches Störsignal vor (S5), erfolgt ein nachfolgend beschriebenes Bestimmen einer Amplitude des periodischen Störsignals oder unmittelbar einer zugehörigen Mindestschwelle Th min basierend auf einem Tastverhältnis des Hintergrundsignals 20 (S6), welches in Bezug auf den Schwellwert eines dritten Komparators definiert wird. Die nach einem der Verfahren ermittelte Mindestschwelle Th min wird dem Schwellwertgenerator 25 oder der Steuereinrichtung 14 übermittelt (S7).

Während des Horchfensters wird somit ein Störpegel des Hintergrundsignals 20 klassifiziert, ein Störpegel geschätzt und die Mindestschwelle Th min basierend auf dem geschätzten Störpegel festgelegt.

An das Horchfenster schließt sich eine Sendephase (S8) zum Aussenden eines Ultraschallsignals 3 und ggf. eine Abklingphase (S9) an, während der der Ultraschallwandler 2 noch nachschwingt. Danach erfolgt eine Empfangsphase (S10) zum Erfassen von Echos. Während der Empfangsphase kann die Empfangsschwelle gemäß einem zeitlich variablen Anteil und der zuvor ermittelten Mindestschwelle Th min eingestellt werden. Für die Diskriminierung empfangener Echos 4 basierend auf der Empfangsschwelle 22 wird auf obige Ausführungen verwiesen.

Innerhalb des Zyklus können mehrere aufeinanderfolgende Sende- und Empfangsphasen (S8-S10) erfolgen (S11). Dann wird der Zyklus wiederholt (S12), indem erneut die Mindestschwelle Th_min durch Erfassen eines Hintergrundsignals 20 festgesetzt wird.

Das Verfahren zum Ermitteln der Empfangsschwelle 22 kann stochastisches Rauschen und periodische Störsignale in einem Hintergrundsignal 20 berücksichtigen. Bevor erläutert wird, wie ein Verfahren ein Hintergrundsignal 20 einem der beiden Typen zuordnet, werden Verfahrensschritte zur Auswertung des Hintergrundsignals 20 isoliert für beide Typen erläutert.

### Auswertung eines stochastischen Rauschens

Das stochastische Rauschen kann alle Hintergrundsignale 20 umfassen, die per se keine Regelmäßigkeit aufweisen, z.B. thermisches Rauschen von Strompegeln, oder deren Regelmäßigkeit innerhalb des Horchfensters nicht erfasst werden kann. Der Pegel der stochastischen Störsignale kann somit für einen einzelnen Zeitpunkt nicht vorhergesagt werden, jedoch ergibt sich über die Zeit betrachtet eine Häufigkeitsverteilung der eingenommen Pegel. Das Funktional der Häufigkeitsverteilung der Momentan- Amplitude ist durch die Art des Rauschens festgelegt. Die Häufigkeitsverteilung kann anhand von Experimenten ermittelt und aufgezeichnet werden. Die Häufigkeitsverteilung kann auch auf Basis von Modellen ermittelt werden. Die Häufigkeitsverteilung kann ein einziges Maximum bei einem Pegel aufweisen und zu kleineren und größeren Pegeln monoton abfallen.

Die Signalstärke einer Rauschquelle bestimmt die Lage des Maximums, ggf. die Kurvenform oder andere Parameter der Häufigkeitsverteilung. Die Abhängigkeit der Häufigkeitsverteilung von der Signalstärke kann aufgezeichnet und in Tabellen hinterlegt werden. Anstelle die Signalstärke mit den Häufigkeitsverteilungen aufzuzeichnen, kann auch eine adäquate Mindestschwelle Th min für die Signalstärke aufgezeichnet werden, mit der die Rauschquelle ausreichend unterdrückt wird.

Die Häufigkeitsverteilung wird mit Hilfe zweier Schwellwerte bestimmt. Hierbei wird angenommen, dass die (normierte) Häufigkeitsverteilung bereits durch zwei Punkte festgelegt ist. Die beiden Schwellwerte sind betragsmäßig unterschiedlich und können beispielsweise sich um einen Faktor von 2 bis 5 unterscheiden. Die Häufigkeit, mit der das verstärkte und gefilterte Hintergrundsignal 20 einen unteren, ersten Schwellwerts 32 und einen oberen, zweiten Schwellwert 33 einnimmt wird aufgezeichnet.

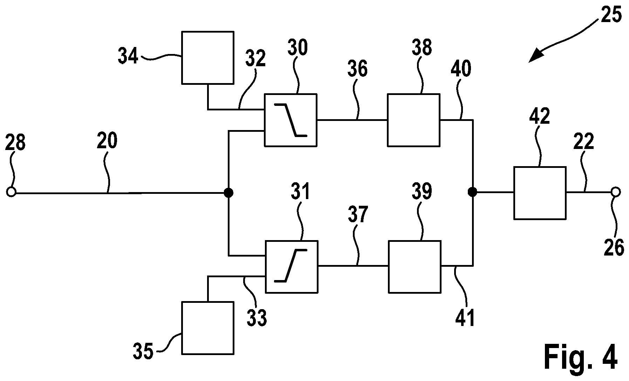

Ein beispielhafter Aufbau zum Auswerten stochastischer Hintergrundsignale 20 mittels des Schwellwertgenerators 25 wird nachfolgend skizziert (Fig. 4). Das Hintergrundsignal 20 kann zwei Schwellwertkomparatoren 30, 31 zugeführt werden.

Der erste Schwellwertkomparator 30 vergleicht das Eingangssignal 20 mit dem ersten Schwellwert 32. Der erste Schwellwert 32 kann durch eine Spannungsquelle 34 dem ersten Schwellwertkomparator 30 zugeführt werden. Der erste Schwellwertkomparator 30 gibt einen Zählpuls 36 aus, wenn das Eingangssignal 20 den ersten Schwellwert 32 betragsmäßig überschreitet. Ein nachgeschalteter Zähler 38 erfasst den Zählpuls 36 und inkrementiert einen ersten Zählerwert 40.

Der zweite Schwellwertkomparator 31 vergleicht das Eingangssignal 20 mit einem zweiten Schwellwert 33. Der Betrag des zweiten Schwellwerts 33 ist größer als der Betrag des ersten Schwellwerts 32. Der zweite Schwellwert 33 kann durch eine zweite Spannungsquelle 35 bereitgestellt werden. Der zweite Schwellwertkomparator 31 gibt einen Zählpuls 37 aus, wenn das Eingangssignal 20 den zweiten Schwellwert 33 betragsmäßig überschreitet. Ein nachgeschalteter zweiter Zähler 39 erfasst den Zählpuls 37 und inkrementiert einen zweiten Zählerwert 41.

Der erste Zählerwert 40 wird erhöht, wenn der Signalpegel des Eingangssignals 20 einen unteren Pegel entsprechend dem unteren Schwellwert überschreitet und der zweite Zählerwert 41 wird erhöht, wenn das Eingangssignal 20 einen hohen Pegel entsprechend dem oberen Schwellwert überschreitet.

Der erste Zählerwert 40 und der zweite Zählerwert 41 werden einer Datenverarbeitungseinrichtung 42 zugeführt, die das Rauschpotential des Eingangssignals 20 anhand der beiden Zählwerte 40, 41 abschätzt. Die beiden Zählerwerte 40, 41 repräsentieren die Häufigkeit, mit der das Eingangssignal 20 die beiden verschiedenen Pegel entsprechend dem unteren, ersten Schwellwerts 32 und dem oberen, zweiten Schwellwert 33 einnimmt. Die Datenverarbeitungseinrichtung 42 ermittelt aus den Häufigkeiten eine Mindestschwelle Th_min beispielsweise basierend auf den angelegten Tabellen zu den Häufigkeitsverteilungen und zugehörigen Mindestschwellen Th_min.

### Auswertung eines periodischen Störsignals

Periodische Störsignale können z.B. von Gasentladungslampen mit elektronischen Vorschaltgeräten oder Induktionsschleifen von bedarfsgesteuerten Ampelanlagen erzeugt werden.

Die periodischen Störsignale weisen eine (weitgehend) konstante Amplitude auf. Aufgrund des Bandpasses kann angenommen werden, dass die relevanten Anteile periodischer Störsignale sinusförmig sind und ggf. Oberwellen unterdrückt werden. Die Frequenz oder Periodizität dieser Störsignale liegt ferner im Bereich des Bandpasses des Bandpassfilters 18, weil andere Störsignale schaltungsbedingt stark gedämpft werden.

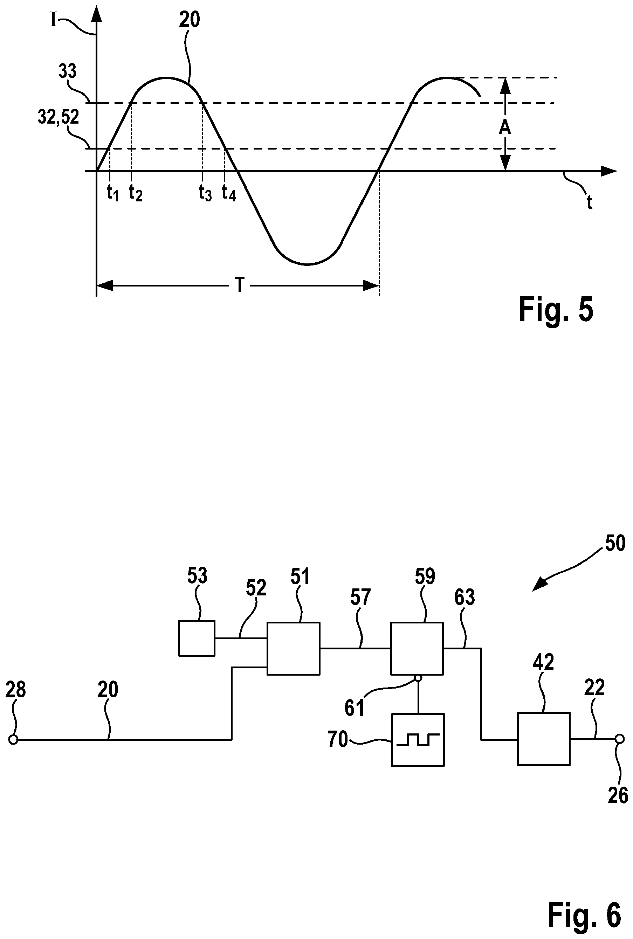

In Fig. 5 ist ein beispielhaftes Hintergrundsignal 20 dargestellt, das nur ein periodisches Störsignal aufweist. Das Hintergrundsignal 20 weist eine Amplitude auf, die entweder permanent unter dem oberen, zweiten Schwellwert 33 liegt oder genauso häufig den unteren, ersten Schwellwert 32 überschreitet, wie sie den oberen, zweiten Schwellwert 33 überschreitet. Der untere, erste Schwellwert 32 kann so gewählt werden, dass Störsignale von vernachlässigbarer Amplitude den unteren, ersten Schwellwert 32 nicht überschreiten. Die Anzahl, mit der der erste Schwellwert 32 und ggf. der zweite Schwellwert 33 eingenommen wird, ist nur von der Dauer des Horchfensters und der Frequenz des Störsignals abhängig, jedoch nicht von der Amplitude.

Ein Beitrag zum Rauschpegel durch ein periodisches Störsignal ist eine Funktion der Amplitude des periodischen Störsignals. Die Amplitude kann nicht aus einem Vergleich der ersten und zweiten Häufigkeit bestimmt werden, wie für eine stochastische Rauschquelle.

Die Amplitude kann jedoch anhand von Tastverhältnissen bestimmt werden, für die die Amplitude größer als der untere, erste Schwellwert und/oder der obere, zweiten Schwellwert ist. Beispielhafte Tastverhältnisse sind nachfolgend zusammen mit einer beispielhaften Auswertungseinrichtung angegeben.

Das Bestimmen der Amplitude eines periodischen Hintergrundsignals 20 wird mit Verweis auf Fig. 5 erläutert. Der Pegel I des beispielhaften periodischen Störsignals 20 mit einer Amplitude A ist über die Zeit t aufgetragen. Ein dritter Schwellwert 52 mit dem Pegel P wird zum Zeitpunkt t1 überschritten und zum Zeitpunkt t4 unterschritten. Das Störsignal 20 ist für die erste Zeitspanne dtl = t4 - t1 oberhalb des dritten Schwellwerts 52.

Ein Tastverhältnis kann durch die Zeitspanne dtl, für die der Pegel betragsmäßig oberhalb des dritten Schwellwerts 52 liegt, zur Dauer einer Periode T definiert werden. Äquivalent können die Zeitspannen dtl während eines Horchfensters aufaddiert und ins Verhältnis zu der Dauer des Horchfensters gesetzt werden. Unter der Annahme eines sinusförmigen Hintergrundsignals 20 kann die Amplitude A aus dem Pegel P1 der dritten Schwelle 52 und dem Tastverhältnis geschätzt werden.

In Fig. 6 ist eine Auswertungseinrichtung 50 eines Schwellwertgenerators als Blockdiagramm gezeigt, die die Amplitude A eines periodischen Störsignals 20 bestimmen kann. Das Hintergrundsignal 20 wird einem dritten Komparator 51 zugeführt, der einen dritten Schwellwert 52 von der ersten Spannungsquelle 53 empfängt. Ein Ausgangssignal 57 des dritten Komparators 51 ist abhängig davon, ob der aktuelle Pegel des Hintergrundsignals 20 geringer oder größer als ein dritter Schwellwert 52 ist. Das Ausgangssignal 57 startet bzw. stoppt einen nachgeschalteten zustandsgesteuerten, dritten Zähler 59. Ein Eingang 61 des dritten Zählers 59 ist mit einem Taktgeber 70 gekoppelt. Der dritte Zähler 59 zählt somit die Takte entweder während das Hintergrundsignal 20 größer oder geringer oder als der dritte Schwellwert 32 ist und bestimmt somit die Dauer eines Phasenabschnitts oder eines Tastverhältnisses, für die der Pegel des Hintergrundsignals 20 oberhalb oder unterhalb des dritten Schwellwerts 52 liegt. Der dritte Zählerwert 63 des dritten Zählers 59 entspricht der Dauer dtl und wird an die Datenverarbeitungseinrichtung 42 zum Ermitteln der Amplitude des Störsignals 20 und der Störpegelschätzung weitergeleitet.

Die Dauer dtl kann über mehrere Zyklen während des Horchfensters aufsummiert werden, um einen Mittelwert zu erhalten. Hierdurch werden Rauscheinflüsse und Quantisierungsfehler ausgemittelt. Der dritte Schwellwert 52 kann gleich dem ersten oder dem zweiten Schwellwert 32, 33 gewählt werden.

Alternativ kann eine Dauer eines anderen Phasenabschnitts des periodischen Störsignals 20 bestimmt werden, z.B. zwischen dem Überschreiten des dritten Schwellwerts 52 und eines betragsmäßig größeren vierten Schwellwerts. Ein vierter Komparator vergleicht das Hintergrundsignal mit dem vierten Schwellwert und gibt ein entsprechendes weiteres Ausgangssignal aus. Die Ausgangssignale des dritten und des vierten Komparators werden logisch verknüpft dem dritten Zähler zugeführt.

### Analyse des Hintergrundsignals 20

Die periodischen Störsignale können daran erkannt werden, dass ihr Pegel entweder permanent unter dem oberen, zweiten Schwellwert 33 liegt oder das periodische Störsignal genauso häufig den unteren, ersten Schwellwert 32 überschreitet, wie es den oberen, zweiten Schwellwert 33 überschreitet.

Eine Ausführungsform eines Verfahrens zum Bestimmen der Empfangsschwelle 22 bzw. der Mindestschwelle Th_min vergleicht die erste und die zweite Häufigkeit, mit der der untere bzw. der obere Schwellwert 32, 33 überschritten werden. Liegt die zweite Häufigkeit nahe Null, d.h. ist geringer als ein Mindestwert, oder ist etwa gleich groß wie die erste Häufigkeit, d.h. unterscheidet sich um weniger als eine festgelegte Differenz von der ersten Häufigkeit, wird ein Hintergrundsignal 20 mit einer dominanten periodischen Störquelle angenommen. Die Empfangsschwelle 22 wird anhand der Amplitude des Hintergrundsignals 20 festgelegt, die basierend auf einer der obigen Verfahren zum Auswerten eines periodischen Störsignals beschrieben ist. Andernfalls wird die Empfangsschwelle 22 basierend auf einem der obigen Verfahren zum Auswerten eines stochastischen Rauschens bestimmt.

Die Unterscheidung zwischen den beiden Rauschtypen kann auch auf dem Betrag der ersten Häufigkeit basieren. Die relevanten periodischen Störsignale weisen eine bekannte Frequenz, z.B. im Bereich von 40- 60 kHz, bedingt durch den Bandpassfilter auf. Die Häufigkeit bedingt durch ein periodisches Störsignal ist somit nach unten begrenzt, z.B. auf mindestens 80 Ereignisse bei einem Horchfenster von 2 ms. Wird eine geringere Häufigkeit erfasst, wird ein dominantes stochastisches Rauschen angenommen. Die Auswertung wird entsprechend ausgewählt.

In einer Ausführungsform können der obere, zweite Schwellwert 33 und der untere, erste Schwellwert 32 festgesetzt sein. Der untere, erste Schwellwert 32 kann beispielsweise ein Drittel des oberen Schwellwerts 33 betragen. In einer anderen Ausführungsform werden die Schwellwerte dynamisch in Abhängigkeit eines vorhergehenden Zyklus festgelegt. So kann beispielsweise der obere Schwellwert 33 gleich der zuvor bestimmten Mindestschwelle Th min gesetzt werden. Der untere, erste Schwellwert 32 kann dann einen festen, vorbestimmten Bruchteil, zum Beispiel die Hälfte, ein Drittel des oberen, zweiten Schwellwertes 33 betragen.

In einer Ausführungsform wird das Hintergrundsignal nur auf ein stochastisches Rauschen hin ausgewertet. Es erfolgt keine Prüfung, ob ein periodisches Störsignal vorliegt.

## Patentansprüche

1. Verfahren zum Festlegen einer Empfangsschwelle (22) eines Ultraschallsonars (1), wobei die Empfangsschwelle (22) aus einer Mindestschwelle und einem sich über die Zeit ändernden Anteils zusammengesetzt ist, mit den folgenden Schritten:
Empfangen eines Hintergrundsignals (20) durch das Ultraschallsonar (1) während eines Horchfensters, wobei während des Horchfensters kein Echo signifikanter Signalstärke empfangen wird, wobei das aufgenommene Hintergrundsignal (20) gleiche Filter (17) und Verstärkerstufen (18) wie ein elektrisches Signal (20) eines empfangenen Echos (4) durchläuft,
Bestimmen einer ersten Häufigkeit (40) eines Durchschreitens eines ersten Schwellwertes (32) durch das Hintergrundsignal (20);
Bestimmen einer zweiten Häufigkeit (41) eines Durchschreitens eines zweiten Schwellwertes (33) durch das Hintergrundsignal (20), wobei der zweite Schwellwert (33) betragsmäßig größer als der erste Schwellwert (32) gewählt wird, und Klassifizieren des Hintergrundsignals (20) in ein stochastisches Rauschen oder ein periodisches Störsignal basierend auf einem Betrag der ersten Häufigkeit des Durchschreitens des ersten Schwellenwerts;
Festlegen der Empfangsschwelle (22) basierend auf der ersten und zweiten Häufigkeit (40, 41), wenn das Hintergrundsignal (20) als stochastisches Rauschen klassifiziert wird.

2. Verfahren nach Anspruch 1, **dadurch gekennzeichnet, dass** die Empfangsschwelle (22) auf einem Tastverhältnis des Hintergrundsignals (20) basiert, wobei das Tastverhältnis durch Diskriminieren des Hintergrundsignals (20) an einem dritten Schwellwert (32, 33) festgelegt wird, wenn das Hintergrundsignal (20) als periodisches Störsignal klassifiziert wird.

3. Verfahren nach Anspruch 2, wobei das Hintergrundsignal (20) als periodisches Störsignal klassifiziert wird, wenn sich die erste und die zweite Häufigkeit (40, 41) um weniger als einen unteren Wert oder mehr als einen oberen Wert unterscheiden, andernfalls wird das Hintergrundsignal (20) als stochastisches Störsignal klassifiziert.

4. Verfahren nach Anspruch 2 oder 3, wobei das Tastverhältnis aus einer Zeitspanne (dt1), für die ein Pegel des Hintergrundsignals (20) betragsmäßig oberhalb des dritten Schwellwerts (32) liegt, zu einer Dauer des Horchfensters festgelegt wird.

5. Verfahren nach einem der vorhergehenden Ansprüche, wobei eine Mindestschwelle (Th_min) der Empfangsschwelle basierend auf dem Hintergrundsignal (20) festgelegt wird.

6. Verfahren nach einem der vorhergehenden Ansprüche, wobei eine Empfangsschwelle aus einer Tabelle ausgelesen wird, die erste und zweite Häufigkeiten jeweils einer Empfangsschwelle zuordnen.

7. Verfahren nach einem der vorherigen Ansprüche 1, wobei die Verfahrensschritte zum Festlegen der Empfangsschwelle zyklisch wiederholt werden und wobei für einen Zyklus der zweite Schwellwert auf die in dem vorherigen Zyklus festgelegte Empfangsschwelle gesetzt wird und der erste Schwellwert auf einen vorbestimmten Bruchteil des zweiten Schwellwerts festgesetzt wird.

8. Vorrichtung zum Festlegen einer Empfangsschwelle (22) eines Ultraschallsonars wobei die Empfangsschwelle aus einer Mindestschwelle und einem über die Zeit sich ändernden Anteil zusammengesetzt ist, mit:
einer Empfangsstufe zum Empfangen eines Hintergrundsignals (20) durch das Ultraschallsonar (1) während eines Horchfensters, in welchem kein Echo (4) signifikanter Signalstärke während des Horchfensters empfangen wird, wobei das Hintergrundsignal (20) gleiche Filter (17) und Verstärkungsstufen (18) durchlaufen ist, wie ein elektrisches Signal (20) eines empfangenen Echos (4);
einem ersten Komparator (30) und einem ersten Zähler (38) zum Erfassen einer ersten Häufigkeit (40) eines Durchschreitens eines ersten Schwellwertes (32) durch ein Hintergrundsignal (20),
einem zweiten Komparator (31) und einem zweiten Zähler (39) zum Erfassen einer zweiten Häufigkeit (41) eines Durchschreitens eines zweiten Schwellwertes (33) durch das Hintergrundsignal (20), wobei der zweite Schwellwert (33) betragsmäßig größer als der erste Schwellwert (32) ist,
die Vorrichtung **gekennzeichnet durch**
ein Mittel zum Klassifizieren des Hintergrundsignals (20) in ein stochastisches Rauschen oder ein periodisches Störsignal; basierend auf einem Betrag der ersten Häufigkeit (40) des Durchschreitens des ersten bzw. des zweiten Schwellwertes; und eine Datenverarbeitungseinrichtung (42) zum Festlegen der Empfangsschwelle (22) basierend auf der ersten und zweiten Häufigkeit (40, 41), wenn das Hintergrundsignal (20) als stochastisches Rausch klassifiziert wird.

9. Vorrichtung nach Anspruch 8 mit weiter
einem dritten Komparator zum Vergleichen des Hintergrundsignals (20) mit einem dritten Schwellwert,
einem zustandsgesteuerten, dritten Zähler (59) dessen Steuereingang mit dem dritten Komparator (51) zum Aktivieren und Deaktivieren des dritten Zählers (59) in Abhängigkeit des Vergleichs des Hintergrundsignals mit dem dritten Schwellwert gekoppelt ist und einem Taktgeber (70), der mit einem Zählereingang des zustandsgesteuerten, dritten Zählers (59) zum Zählen einer Anzahl von Takten während einer aktiven Phase des dritten Zählers gekoppelt ist;
wobei ein Ausgang des zustandsgesteuerten, dritten Zählers (59) mit der Datenverarbeitungseinrichtung (42) zum Ermitteln einer Empfangsschwelle (22) basierend auf der gezählten Anzahl von Takten gekoppelt ist.

10. Ultraschallsonar mit
einem Komparator (14) zum Vergleichen eines Eingangssignals (20) mit einer Empfangsschwelle (22) und
einem Empfangsschwellengenerator (20) nach Anspruch 8 oder 9 zum Festlegen der Empfangsschwelle (22).

## Claims

1. Method for stipulating a reception threshold (22) of an ultrasonic sonar (1), wherein the reception threshold (22) is put together from a minimum threshold and a component that changes over time, having the following steps:
receiving a background signal (20) on the ultrasonic sonar (1) during a listening window, wherein no echoes of significant signal strength are received during the listening window, the background signal (20) picked up passing through the same filters (17) and amplifier stages (18) as an electrical signal (20) of a received echo (4),
determining a first frequency (40) with which the background signal (20) passes a first threshold value (32);
determining a second frequency (41) with which the background signal (20) passes a second threshold value (33), the second threshold value (33) being chosen to have a greater magnitude than the first threshold value (32), and
classifying the background signal (20) into stochastic noise or a periodic interference signal based on a magnitude of the first frequency with which the first threshold value is passed;
stipulating the reception threshold (22) based on the first and second frequencies (40, 41) if the background signal (20) is classified as stochastic noise.

2. Method according to Claim 1, **characterized in that** the reception threshold (22) is based on a duty ratio of the background signal (20), the duty ratio being stipulated at a third threshold value (32, 33) by discriminating the background signal (20) if the background signal (20) is classified as a periodic interference signal.

3. Method according to Claim 2, wherein the background signal (20) is classified as a periodic interference signal if the first and second frequencies (40, 41) differ by less than a lower value or more than an upper value, otherwise the background signal (20) is classified as a stochastic interference signal.

4. Method according to Claim 2 or 3, wherein the duty ratio is stipulated for a duration of the listening window from a period of time (dt1) for which the magnitude of the level of the background signal (20) is above the third threshold value (32).

5. Method according to one of the preceding claims, wherein a minimum threshold (Th_min) of the reception threshold is stipulated based on the background signal (20).

6. Method according to one of the preceding claims, wherein a reception threshold is read from a table that assigns first and second frequencies to a respective reception threshold.

7. Method according to one of the preceding claims 1, wherein the method steps for stipulating the reception threshold are cyclically repeated and wherein for one cycle the second threshold value is set to the reception threshold stipulated in the previous cycle and the first threshold value is fixed at a predetermined fraction of the second threshold value.

8. Apparatus for stipulating a reception threshold (22) of an ultrasonic sonar, wherein the reception threshold is put together from a minimum threshold and a component that changes over time, having:
a reception stage for receiving a background signal (20) on the ultrasonic sonar (1) during a listening window in which no echoes (4) of significant signal strength are received during the listening window, the background signal (20) having passed through the same filters (17) and amplification stages (18) as an electrical signal (20) of a received echo (4),
a first comparator (30) and a first counter (38) for detecting a first frequency (40) with which a background signal (20) passes a first threshold value (32),
a second comparator (31) and a second counter (39) for detecting a second frequency (41) with which the background signal (20) passes a second threshold value (33), the second threshold value (33) having a greater magnitude than the first threshold value (32),
the apparatus **characterized by**
a means for classifying the background signal (20) into stochastic noise or a periodic interference signal, based on a magnitude of the first frequency (40) with which the first or the second threshold value is passed, and
a data processing device (42) for stipulating the reception threshold (22) based on the first and second frequencies (40, 41) if the background signal (20) is classified as stochastic noise.

9. Apparatus according to Claim 8, further having a third comparator for comparing the background signal (20) with a third threshold value,
a state-controlled, third counter (59) whose control input is coupled to the third comparator (51) to activate and deactivate the third counter (59) on the basis of the comparison of the background signal with the third threshold value, and a clock generator (70) that is coupled to a counter input of the state-controlled, third counter (59) to count a number of clock cycles during an active phase of the third counter;
wherein an output of the state-controlled, third counter (59) is coupled to the data processing device (42) to ascertain a reception threshold (22) based on the counted number of clock cycles.

10. Ultrasonic sonar having
a comparator (14) for comparing an input signal (20) with a reception threshold (22) and
a reception threshold generator (20) according to Claim 8 or 9 for stipulating the reception threshold (22) .

## Revendications

1. Procédé de définition d'un seuil de réception (22) d'un sonar à ultrasons (1), le seuil de réception (22) étant composé d'un seuil minimal et d'une composante qui varie dans le temps, comprenant les étapes suivantes :
réception d'un signal d'arrière-plan (20) par le sonar à ultrasons (1) pendant une fenêtre d'écoute, aucun écho ayant une intensité de signal significative n'étant reçu pendant la fenêtre d'écoute,
le signal d'arrière-plan (20) enregistré traversant les mêmes filtres (17) et étages d'amplification (18) qu'un signal électrique (20) d'un écho reçu (4),
détermination d'une première fréquence (40) d'un franchissement d'une première valeur de seuil (32) par le signal d'arrière-plan (20) ;
détermination d'une deuxième fréquence (41) d'un franchissement d'une deuxième valeur de seuil (33) par le signal d'arrière-plan (20), la valeur absolue de la deuxième valeur de seuil (33) étant choisie supérieure à celle de la première valeur de seuil (32), et
classification du signal d'arrière-plan (20) en un bruit stochastique ou en un signal parasite périodique en se basant sur une valeur absolue de la première fréquence du franchissement de la première valeur de seuil ;
définition du seuil de réception (22) en se basant sur la première et la deuxième fréquence (40, 41) lorsque le signal d'arrière-plan (20) est classifié comme un bruit stochastique.

2. Procédé selon la revendication 1, **caractérisé en ce que** le seuil de réception (22) se base sur un rapport cyclique du signal d'arrière-plan (20), le rapport cyclique étant défini par discrimination du signal d'arrière-plan (20) au niveau d'une troisième valeur de seuil (32, 33) lorsque le signal d'arrière-plan (20) est classifié comme un signal parasite périodique.

3. Procédé selon la revendication 2, le signal d'arrière-plan (20) étant classifié comme un signal parasite périodique lorsque la première et la deuxième fréquence (40, 41) se différentient de moins d'une valeur basse ou de plus d'une valeur haute, dans le cas contraire le signal d'arrière-plan (20) étant classifié comme un signal parasite stochastique.

4. Procédé selon la revendication 2 ou 3, le rapport cyclique étant défini par le rapport entre un intervalle de temps (dt1), pendant lequel un niveau du signal d'arrière-plan (20) se trouve, de par sa valeur absolue, au-dessus de la troisième valeur de seuil (32), et une durée de la fenêtre d'écoute.

5. Procédé selon l'une des revendications précédentes, un seuil minimal (Th_min) du seuil de réception état défini en se basant sur le signal d'arrière-plan (20).

6. Procédé selon l'une des revendications précédentes, un seuil de réception étant lu depuis un tableau qui associe respectivement les première et deuxième fréquences à un seuil de réception.

7. Procédé selon l'une des revendications précédentes 1, les étapes de procédé de définition du seuil de réception étant répétées de manière cyclique et, pour un cycle, la deuxième valeur de seuil étant fixée au seuil de réception définie dans le cycle précédent et la première valeur de seuil étant définie à une fraction prédéterminée de la deuxième valeur de seuil.

8. Dispositif de définition d'un seuil de réception (22) d'un sonar à ultrasons, le seuil de réception étant composé d'un seuil minimal et d'une composante qui varie dans le temps, comprenant :
un étage de réception destiné à recevoir un signal d'arrière-plan (20) par le sonar à ultrasons (1) pendant une fenêtre d'écoute, dans lequel aucun écho (4) ayant une intensité de signal significative n'est reçu pendant la fenêtre d'écoute, le signal d'arrière-plan (20) traversant les mêmes filtres (17) et étages d'amplification (18) qu'un signal électrique (20) d'un écho reçu (4),
un premier comparateur (30) et un premier compteur (38) destinés à détecter une première fréquence (40) d'un franchissement d'une première valeur de seuil (32) par un signal d'arrière-plan (20) ;
un deuxième comparateur (31) et un deuxième compteur (39) destinés à détecter une deuxième fréquence (41) d'un franchissement d'une deuxième valeur de seuil (33) par le signal d'arrière-plan (20), la valeur absolue de la deuxième valeur de seuil (33) étant choisie supérieure à celle de la première valeur de seuil (32), le dispositif étant **caractérisé par**
un moyen de classification du signal d'arrière-plan (20) en un bruit stochastique ou en un signal parasite périodique en se basant sur une valeur absolue de la première fréquence (40) du franchissement de la première valeur de seuil ou de la deuxième valeur de seuil ; et
un appareil de traitement de données (42) destiné à définir le seuil de réception (22) en se basant sur la première et la deuxième fréquence (40, 41) lorsque le signal d'arrière-plan (20) est classifié comme un bruit stochastique.

9. Dispositif selon la revendication 8, comprenant en outre un troisième comparateur destiné à comparer le signal d'arrière-plan (20) avec une troisième valeur de seuil ;
un troisième compteur (59) commandé en fonction de l'état, dont l'entrée de commande est connectée au troisième comparateur (51) pour activer et désactiver le troisième compteur (59) en fonction de la comparaison du signal d'arrière-plan avec la troisième valeur de seuil et un générateur d'horloge (70) qui est connecté à une entrée de comptage du troisième compteur (59) commandé en fonction de l'état pour compter un nombre de cycles pendant une phase active du troisième compteur ;
une sortie du troisième compteur (59) commandé en fonction de l'état étant connectée à l'appareil de traitement de données (42) pour déterminer un seuil de réception (22) en se basant sur le nombre compté de cycles.

10. Sonar à ultrasons comprenant
un comparateur (14) destiné à comparer un signal d'entrée (20) avec un seuil d'entrée (22) et
un générateur de seuil de réception (20) selon la revendication 8 ou 9 pour définir le seuil de réception (22) .
